# EUROPÄISCHE PATENTSCHRIFT

(11) **EP 1 042 858 B1**
(45) Veröffentlichungstag und Bekanntmachung des Hinweises auf die Patenterteilung: **14.11.2001**
(21) Anmeldenummer: 98966516.1
(22) Anmeldetag: 09.12.1998
(51) Int. Cl.: H02K 23/30, H02K 15/09

(54) **KOMMUTATORMOTOR, INSBESONDERE ZUM ANTRIEB EINES KRAFTFAHRZEUG-SERVOANTRIEBES, UND VERFAHREN ZU DESSEN HERSTELLUNG**
COMMUTATOR MOTOR, IN PARTICULAR FOR DRIVING A MOTOR VEHICLE SERVO DRIVE, AND PROCESS FOR PRODUCING THE SAME
MOTEUR ELECTRIQUE A COLLECTEUR DESTINE NOTAMMENT A L'ENTRAINEMENT DE LA SERVOCOMMANDE D'UN VEHICULE AUTOMOBILE ET PROCEDE DE PRODUCTION CORRESPONDANT

(30) Priorität: 22.12.1997 DE 19757279
(43) Veröffentlichungstag der Anmeldung: 11.10.2000
(73) Patentinhaber: SIEMENS AKTIENGESELLSCHAFT, 80333 München (DE)
(72) Erfinder: GASTL, Peter, D-97236 Randersacker (DE); KIRCHNER, Heinrich, D-97080 Würzburg (DE); KNAUB, Norbert, D-97508 Grettstadt (DE)
(86) Internationale Anmeldenummer: DE9803619
(87) Internationale Veröffentlichungsnummer: WO9933159

(56) Entgegenhaltungen:
- US-A- 4 447 751
- US-A- 4 876 472
- PATENT ABSTRACTS OF JAPAN vol. 001, no. 092 (E-038), 25. August 1977 & JP 52 027505 A (SECOH GIKEN INC), 1. März 1977

## Beschreibung

Die Erfindung bezieht sich auf einen Kommutatormotor, insbesondere zum Antrieb eines Kraftfahrzeug-Servoantriebes, und auf ein Verfahren zu dessen Herstellung.

Kommutatormotoren der vorgenannten Art werden z.B. als Gleichstrommotore zum Antrieb von Hydraulikaggregaten von automatischen Bremssystemen oder z.B. für servounterstützte Lenkbetätigungen in Kraftfahrzeugen eingesetzt. Derartige Kommutatormotore weisen in der Regel zumindest zwei Polpaare und somit vier, vorzugsweise permanenterregte, Stator-Erregerpole und dementsprechend zwei Bürstenpaare mit entsprechend vier Bürsten auf; die Bürsten beschleifen Lamellen eines rotorseitigen Kommutators, an die eine Rotorwicklung mit in Nuten eines Rotor-Blechpaketes eingewickelten Ankerspulen angeschlossen ist.

Gemäß Aufgabe vorliegender Erfindung soll der Teile- und Fertigungsaufwand eines derartigen, als Massenserienprodukt gefertigten Kommutatormotors ohne Einschränkung seiner Betriebstüchtigkeit gemindert werden.

Die Lösung dieser Aufgabe gelingt durch einen Kommutatormotor gemäß Anspruch 1 sowie durch ein Verfahren zu dessen Herstellung gemäß Anspruch 5; vorteilhafte Ausgestaltungen des Kommutatormotors sind Gegenstand der Unteransprüche 2 bis 4 und eine vorteilhafte Ausgestaltung des erfindungsgemäßen Verfahrens ist Gegenstand des Anspruchs 6.

Der erfindungsgemäße Kommutatormotor erlaubt trotz einer Polpaarzahl größer als 1 einen Betrieb mit nur zwei Bürsten, wobei die Lamellen-Kontaktbrücken, welche die üblicherweise vorgesehenen weiteren Bürsten ersetzen, bei Wicklungsherstellung mitwickelbar sind und unerwünschte Ausgleichsströme auf einfache Weise vermieden werden können.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:
- FIG 1: die Abwicklung des Rotors eines vierpoligen Kommutatormotors mit zwölf Nuten und zwölf Kommutator-Haken sowie mit zwei erfindungsgemäß über eine durchgewickelte Lamellen-Kontaktbrücke in Reihe geschalteten Ankerspulen und mit nur über zwei Bürsten gespeistem Kommutator;
- FIG 2: die Abwicklung des Rotors gemäß FIG 1 mit üblicher, ohne Lamellen-Kontaktbrücke an die Haken eines Kommutators angeschlossenen Ankerspulen und mit über vier Bürsten gespeistem Kommutator;
- FIG 3, 4: den Rotor gemäß FIG 1 mit vollständiger Wicklungsbelegung mit gemäß FIG 3 durch einen ersten Flyer und gemäß FIG 4 durch einen zweiten Flyer in die Nuten eingewickelten und mit jeweils einer Lamellen-Kontaktbrücke durchgewickelten Spulen;
- FIG 5: in einem Schaltbild die Kontaktierung der Ankerspulen gemäß FIG 3,4 mit den jeweiligen Kommutator-Haken und ihre gegenseitige Verschaltung über die Lamellen-Kontaktbrücken bei Speisung über nur zwei Bürsten;
- FIG 6: in perspektivischer Darstellung einen Rotor mit gemäß FIG 1 nur zwei erfindungsgemäß durch einen Flyer gewickelten und über eine durchgewickelte Lamellen-Kontaktbrücke in Reihe geschalteten Ankerpulen.

Die Erfindung wird im folgenden anhand eines vierpoligen Kommutatormotors mit vier Stator-Erregerpolen N1,S1; N2,S2 und einem Rotor mit zwölf Nuten N1-N12 zwischen zwölf Zähnen Z1-Z12 eines Rotorblechpaketes P und mit zwölf, an entsprechende Lamellen angeschlossenen jeweils von einem Spulenanfang bzw. einem Spulenende einer Ankerspule umschlungenen Kommutator-Haken H1-H12 erläutert.

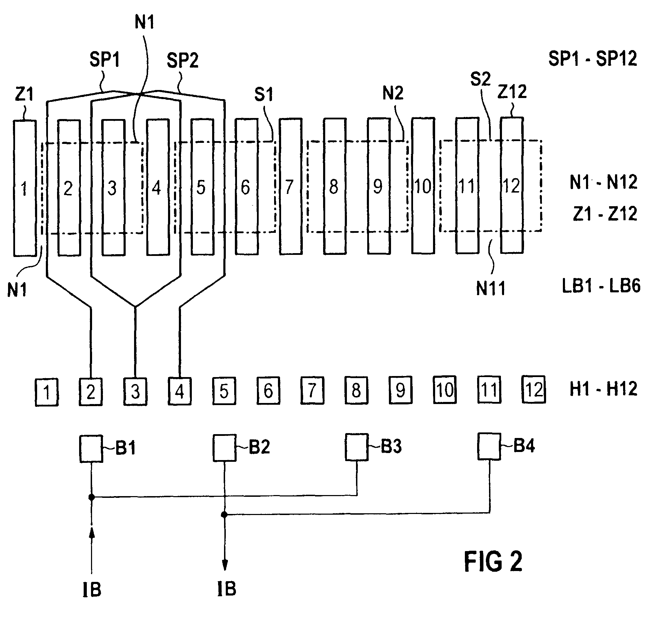

FIG 2 zeigt eine übliche Kommutatormotor-Wicklung, insbesondere Gleichstrommotor-Wicklung, bei der konzentrierte Ankerspulen SP1-SP12 mit jeweils in einer Nut untergebrachten Spulenseiten fortlaufend in Reihe gewickelt sind; dazu sind zwei Ankerspulen SP1;SP2 angedeutet, die beispielsweise von einem Flyer ausgehend mit ihrem Spulenanfang von einem Kommutator-Haken H2 zunächst durch die Nut N1 und dann durch die Nut N4 mit mehreren Windungen und dann mit ihrem Spulenende zum folgenden Kommutator-Haken H3 gewickelt und nach dessen Umschlingung durch die Nut N2 mit ihrer ersten Spulenseite und durch die Nut N5 mit ihrer zweiten Spulenseite zur folgenden Ankerspule SP2 gewickelt werden. In üblicher Weise sind für den hier vorgesehenen vierpoligen Gleichstrommotor vier gleichmäßig am Umfang, jeweils unter einem Stator-Erregerpol N1,S1; N2,S2, verteilt angeordnete Bürsten B1;B2;B3;B4 vorgesehen und dazu jeweils die Bürsten B1 und B3 bzw. B2 und B4 parallel geschaltet, derart daß ein Bürstenstrom IB über die Bürsten B1 und B3 zufließen und über die Bürsten B2 und B4 wieder abfließen kann.

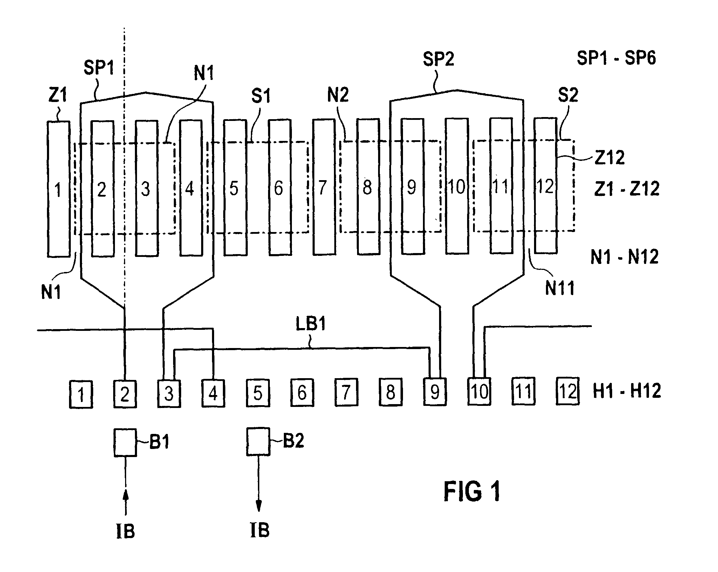

FIG 1 zeigt die Rotorabwicklung eines erfindungsgemäßen Kommutatormotors mit - zur deutlicheren Erläuterung - nur zwei dargestellten, z.B. von einem ersten Flyer wickelbaren, Ankerspulen SP1 und SP2. Von diesem Flyer wird ein Spulendraht ausgehend von einem Kommutator-Haken H2 für den Spulenanfang zu einer mehrgängigen Ankerspule SP1 mit ihrer einen Spulenseite in der Nut N1 und ihrer anderen Spulenseite in der Nut N4 gewickelt und dann mit seinem Spulenende zum folgenden Kommutator-Haken H3 geführt; durch Fixierung des Flyers und tangentiales Verschwenken des Rotors wird anschließend eine Lamellen-Kontaktbrücke LB1 im Zuge der Wicklungsherstellung von dem Kommutator-Haken H3 im Abstand von etwa einer doppelten Polteilung zu dem Kommutator-Haken H9 durchgewickelt und nach Umschlingen des Kommutator-Hakens H9 - bei nunmehr wiederum fixiertem Rotor, jedoch verschwenkbarem Flyer - die zweite Ankerspule SP2 durch die Nut N8 und durch die Nut N11 zum folgenden Kommutator-Haken H10 gewickelt. Anstelle der vier Bürsten B1-B4 im bekannten Fall gemäß FIG 2 sind nunmehr nur zwei Bürsten B1;B2 im gegenseitigen Abstand einer Polteilung vorgesehen. Die an sich üblicherweise vorgesehenen weiteren Bürsten sind in hinsichtlich vermindertem Teileaufwand und in fertigungstechnisch vorteilhafter Weise durch die im Zuge der Wicklungsherstellung durchwickelbaren Lamellen-Kontaktbrücken ersetzt.

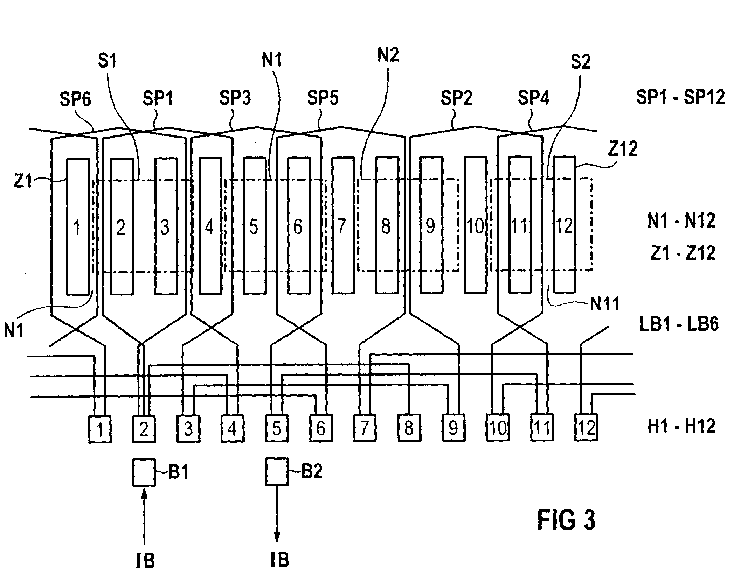

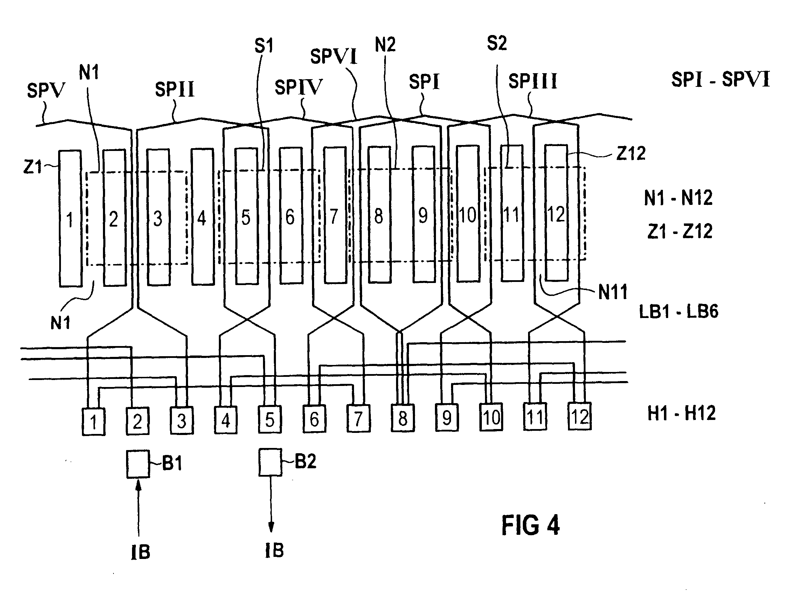

FIG 3,4 zeigen in Abwicklung des gleichen Rotors die Verteilung und Verknüpfung sämtlicher Ankerspulen; dabei sind nach einer Ausgestaltung der Erfindung die Ankerspulen SP1-SP6 gemäß FIG 3 durch einen ersten Flyer F1 und die Ankerspulen SPI-SPVI gemäß FIG 4 durch einen zweiten Flyer, jeweils mit Durchwicklung der entsprechenden Lamellen-Kontaktbrücken LB1-LB6 bzw. LBI-LBVI, hergestellt.

Zweckmäßigerweise erfolgt das Wickeln der Spulen Sp1-SP6 gemäß FIG 3 bzw. der Spulen SPI-SPVI gemäß FIG 4 mit jeweils einem Flyer F1 bzw.F2 gleichzeitig, derart daß immer jeweils in einer gleichzeitigen Wicklungsbewegung des ersten Flyers und des zweiten Flyers eine Spulengruppe mit zwei diametral gegenüberliegenden Ankerspulen (z.B. SP5 bzw.SPV usw.) wikkelbar ist und dabei die beiden Ankerspulen im Sinne eines gleichen elektrischen Widerstandes, insbesondere aufgrund ihres gleichartigen Wickelkopfes, konfiguriert sind; damit können auf besonders einfache Weise mit Sicherheit unerwünschte Ausgleichsströme durch die Lamellen-Kontaktbrücken vermieden werden.

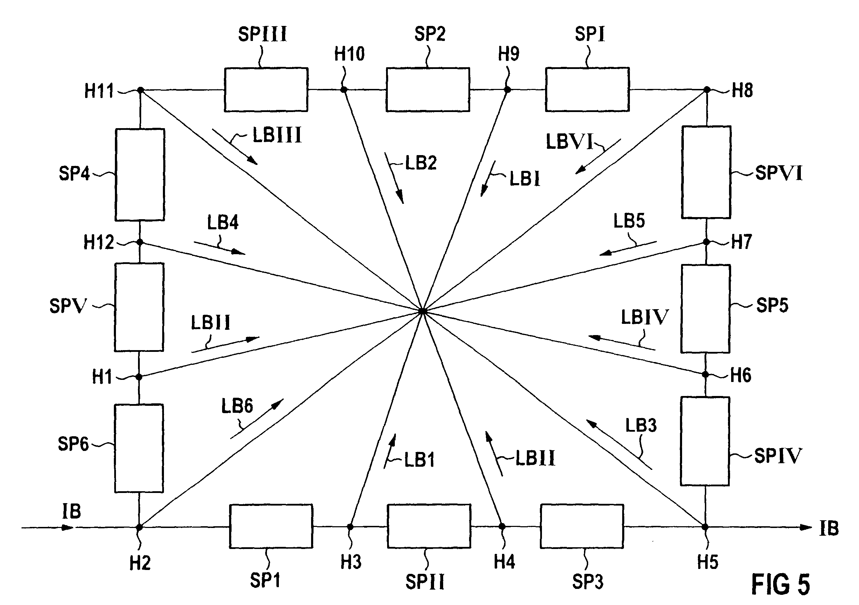

FIG 5 verdeutlicht nochmals die im Sinne einer Vermeidung von Ausgleichströmen vorteilhafte und trotzdem einschließlich der Lamellen-Kontaktbrücken einfach wickelbare Verteilung und gegenseitige Verknüpfung der Ankerspulen unter Berücksichtigung ihrer Anschlüsse an die Kommutator-Haken und ihrer gegenseitigen Parallelschaltung von diametral gegenüberliegenden Wicklungen über die Lamellen-Kontaktbrücken.

Im folgenden ist darüber hinaus das Wickelschema mit den einzelnen Wicklungsschritten für einen ersten Flyer F1 und einen parallel arbeitenden zweiten Flyer F2 näher erläutert; dabei sind die beim jeweiligen Arbeitsschritt jeden Flyers anfallenden Wicklungsbewegungen jeweils parallel verlaufend anzunehmen.

### Flyer 1 :

1. Spulenanfang einhängen in Kommutator-Haken H2.
2. Erste Spule SP1 wickeln zwischen Nut N1 und N4.
3. Spulendraht einhängen in Kommutator-Haken H3
4. Schwenkbewegung des Kommutators K zu Kommutator-Haken H9.
5. Spulendraht einhängen in Kommutator-Haken H9 (Erste Lamellen-Kontaktbrücke LB1).
6. Zweite Spule SP2 wickeln zwischen Nut N8 und N11.
7. Spulendraht einhängen in Kommutator-Haken H10.
8. Schwenkbewegung des Kommutators K zu Kommutator-Haken H4.
9. Spulendraht einhängen in Kommutator-Haken H4 (Zweite Lamellen-Kontaktbrücke LB2).
10. Dritte Spule SP3 wickeln zwischen Nut N3 und N6.
11. Spulendraht einhängen in Kommutator-Haken H5.
12. Schwenkbewegung des Kommutators K zu Kommutator-Haken H11.
13. Spulendraht einhängen in Kommutator-Haken 11 (Dritte Lamellen-Kontaktbrücke LB3).
14. Vierte Spule SP4 wickeln zwischen Nut N10 und N1.
15. Spulendraht einhängen in Kommutator-Haken H12.
16. Schwenkbewegung des Kommutators K zu Kommutator-Haken H6.
17. Spulendraht einhängen in Kommutator-Haken H6 (Vierte Lamellen-Kontaktbrücke LB4).
18. Fünfte Spule SP5 wickeln zwischen Nut N5 und N8.
19. Spulendraht einhängen in Kommutator-Haken H7.
20. Schwenkbewegung des Kommutators K zu Kommutator-Haken H1.
21. Spulendraht einhängen in Kommutator-Haken H1 (Fünfte Lamellen-Kontaktbrücke LBS).
22. Sechste Spule SP6 wickeln zwischen Nut N12 und N3.
23. Spulendraht einhängen in Kommutator-Haken H2.
24. Schwenkbewegung des Kommutators K zu Kommutator-Haken H8.
25. Spulendraht einhängen in Kommutator-Haken H8 (Sechste Lamellen-Kontaktbrücke LB6).
26. Spulendraht abschneiden.

### Flyer 2:

1. Spulenanfang einhängen in Kommutator-Haken H8.
2. Erste Spule SPI wickeln zwischen Nut 7 und 10.
3. Spulendraht einhängen in Kommutator-Haken K9.
4. Schwenkbewegung des Kommutators K zu Kommutator-Haken H3.
5. Spulendraht einhängen in Kommutator-Haken H3 (Erste Lamellen-Kontaktbrücke LBI).
6. Zweite Spule SPII wickeln zwischen Nut N2 und N5.
7. Spulendraht einhängen in Kommutator-Haken H4.
8. Schwenkbewegung des Kommutators K zu Kommutator-Haken H10.
9. Spulendraht einhängen in Kommutator-Haken H10 (Zweite Lamellen-Kontaktbrücke LBII)
10. Dritte Spule SPIII wickeln zwischen Nut N9 und N12.
11. Spulendraht einhängen in Kommutator-Haken H11.
12. Schwenkbewegung des Kommutators K zu Kommutator-Haken H5.
13. Spulendraht einhängen in Kommutator-Haken H5 (Dritte Lamellen-Kontaktbrücke LBIII).
14. Vierte Spule SPIV wickeln zwischen Nut N4 und N7.
15. Spulendraht einhängen in Kommutator-Haken H6.
16. Schwenkbewegung des Kommutators K zu Kommutator-Haken H12.
17. Spulendraht einhängen in Kommutator-Haken H12 (Vierte Lamellen-Kontaktbrücke LBIV).
18. Fünfte Spule SPV wickeln zwischen Nut N11 und N2.
19. Spulendraht einhängen in Kommutator-Haken H1.
20. Schwenkbewegung des Kommutators K zu Kommutator-Haken H7.
21. Spulendraht einhängen in Kommutator-Haken H7 (Fünfte Lamellen-Kontaktbrücke LBV).
22. Sechste Spule SPVI wickeln zwischen Nut N6 und N9.
23. Spulendraht einhängen in Kommutator-Haken H8.
24. Schwenkbewegung des Kommutators K zu Kommutator-Haken H2.
25. Spulendraht einhängen in Kommutator-Haken H2 (Sechste Lamellen-Kontaktbrücke LBVI).
26. Draht abschneiden.

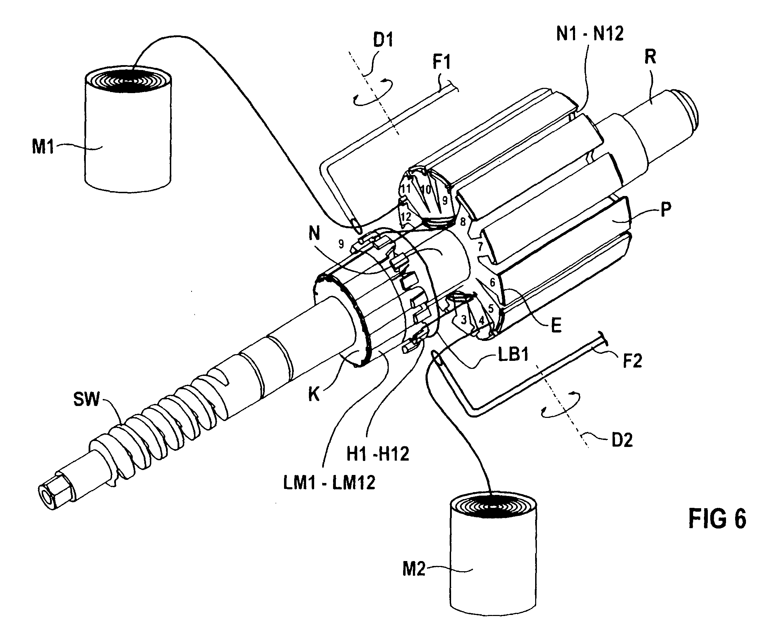

FIG 6 zeigt in perspektivischer Darstellung den Rotor eines Gleichstrommotors für einen Kraftfahrzeug-Servoantrieb. Auf einer Rotorwelle R sind ein mit Nuten N1-N12 versehenes Rotorblechpaket P sowie ein Kommutator K mit Lamellen LM1-LM12 und mit Kommutator-Haken H1-H12 an deren blechpaketseitigen Enden gehaltert. Die Rotorwelle R reicht an ihrem linken Ende mit einer Schneckenwelle SW in einen hier nicht dargestellten Servo-Antrieb einer elektrischen Kupplung in einem Kraftfahrzeug.

In Übereinstimmung mit der vereinfachten Darstellung gemäß FIG 1 sind die beiden in FIG 1 dargestellten Ankerspulen SP1 bzw. SP2 mit ihren entsprechenden Anschlüssen an die Kommutator-Haken H2;H3 bzw.H9;H10 eingetragen. Diese konzentrierten Ankerspulen sind jeweils mittels eines von zwei jeweils um eine Drehachse D1 bzw. D2 über der Oberfläche des Rotorblechpaketes P schwenkbaren und dabei den jeweils gleichen Spulendraht aus einem Spulenmagazin M1 bzw. M2 auswickelnden Flyern F1 bzw. F2 mit ihrer einen Spulenseite in die erste Nut N1 und mit ihrer zweiten Spulenseite in die zweite Nut N4 bei jeweils fixiertem Blechpaket P einwickelbar. Am Ende des Einwickelns der konzentrierten Ankerspule SP1;SP1 wird der Flyer festgehalten und der Rotor mit dem Kommutator K selbst tangential verschwenkt, derart daß die Lamellen-Kontaktbrücke vom Kommutator-Haken H3 zum Kommutator-Haken H9 auf einfache Weise durch tangentiales Durchwickeln zwischen diesen Kommutator-Haken herstellbar ist.

Die Lamellen-Kontaktbrücken, von denen hier nur die eine Lamelle-Kontaktbrücke LB1 dargestellt ist, werden zweckmäßigerweise abgestützt bzw. fixiert auf dem äußeren Umfang des Rotorwellenabschnittes zwischen dem kommutatorhakenseitigen Ende des Kommutators K und der gegenüberliegenden Stirnseite des Rotorblechpaketes P; dabei ist eine Isolierung der Oberfläche der Rotorwelle R in besonders einfacher Weise dadurch erreichbar, daß in an sich bekannter Weise eine stirnseitig vor dem Rotorblechpaket P liegende Kunststoffisolier-Endscheibe E mit einer die Rotorwelle R umfassenden isolierenden Nabe N abgedeckt ist.

Die vorstehend anhand eines vierpoligen Kommutatormotors erläuterte Erfindung umfaßt hinsichtlich ihres Lösungsprinzips auch Elektromotore höherer Polpaarzahl.

## Patentansprüche

1. Kommutatormotor, insbesondere zum Antrieb eines Kraftfahrzeug-Servoantriebes
- mit zumindest vier Stator-Erregerpolen (N1,S1;N2,S2) ;
- mit einer geraden Anzahl von konzentrierten, in Reihe geschalteten Ankerspulen (SP1-SP6; SPI-SPVI), welche Anzahl größer ist als die Anzahl der Stator-Erregerpole;
- mit jeweils bei vier Stator-Erregerpolen nur zwei, im gegenseitigen Abstand einer Polteilung einen Kommutator (K) kontaktierenden Bürsten (B1;B2);
- mit bei Wicklung der Ankerspulen (SP1-SP6;SPI-SPVI) jeweils im Übergang zwischen zwei hintereinander geschalteten Ankerspulen zwischen den entsprechenden Kommutator-Haken (H1-H12) fortlaufend in Reihe durchgewickelten bürstenlosen Lamellen-Kontaktbrücken (LB1-LB6;LBI-LBVI) ;
- mit einer Lamellen-Kontaktbrückenlänge von etwa einer doppelten Polteilung;
- mit jeweils aufeinanderfolgenden Ankerspulenpaaren bestehend aus je zwei diametral gegenüberliegenden Ankerspulen;
- mit einer Parallelschaltung von am Umfang jeweils diametral gegenüberliegenden Ankerspulen (SP1;SPI bzw.SP2;SPII bzw.SP3;SPIII bzw.SP4;SPIV bzw.SP5; SPV bzw.SP6;SPVI).

2. Kommutatormotor nach Anspruch 1
- mit jeweils im Sinne eines gleichen elektrischen Widerstandes gewickelten bzw. konfigurierten Paaren von diametral gegenüberliegenden Ankerspulen(SP1,SPI;SP2;SPII usw.).

3. Kommutarormotor nach Anspruch 1 und/oder 2
- mit jeweils durch je einen Flyer F1 bzw.F2 einer Wickelvorrichtung getrennt, jedoch gleichzeitig gewickelten diametral gegenüberliegenden Ankerspulen.

4. Kommutatormotor nach Anspruch 1
- mit einer Abstützung und/oder Fixierung der Lamellen-Kontaktbrücken im Bereich eines elektrisch isolierten Abschnittes der Rotorwelle R des Kommutatormotors zwischen dessen Kommutator (K) und Rotorblechpaket (P).

5. Verfahren zur Wicklungsherstellung eines Kommutatormotors nach zumindest einem der Ansprüche 1-4
- mit einer Herstellung der Rotorwicklung mit jeweils aufeinanderfolgenden Ankerspulenpaaren bestehend aus je zwei diametral gegenüberliegenden Ankerspulen durch Wicklung der Ankerspulen eines Ankerspulenpaares mit je einem für jede Ankerspule vorgesehenen Flyer F1 bzw.F2 einer Wickelvorrichtung.

6. Verfahren nach Anspruch 5
- mit einer Dreh-Schwenkbewegung des Flyers F1 bzw. F2 zum Wickeln jeweils einer Ankerspule (z.B. SP1) mit Kontaktierung ihres Spulenanfangs an einem ersten Kommutator-Haken (H1) und ihres Spulenendes mit einem zweiten Kommutator-Haken (H2) bei ruhend fixiertem Kommutator (K);
- mit einer tangentialen Schwenkbewegung des Kommutators (K) zur Durchwicklung jeweils einer Lamellen-Kontaktbrücke zwischen dem zweiten Kommutator-Haken (H2) der ersten Ankerspule (SP1) und dem ersten Kommutator-Haken (H9) für den Ankerspulenanfang der zweiten, in Reihe gewickelten Ankerspule (z.B. SP2) bei ruhend fixiertem Flyer (FIG 1)

## Claims

1. Commutator motor, in particular for driving a motor vehicle servodrive,
- having at least four stator field poles (N1, S1; N2, S2);
- having an even number of concentrated armature coils (SP1-SP6; SPI-SPVI) which are connected in series and the number of which is greater than the number of stator field poles;
- in each case having only two brushes (B1; B2) for four stator field poles, which brushes (B1; B2) make contact with a commutator (K) and are spaced apart from one another by one pole pitch;
- having brushless laminate contact links (LB1-LB6; LBI-LBVI), which are in each case wound through continuously in series, when the armature coils (SP1-SP6; SPI-SPVI) are being wound, between the corresponding commutator hooks (H1-H12) at the junction between two series-connected armature coils;
- having a laminate contact link length of approximately twice the pole pitch;
- in each case having successive armature coil pairs, each comprising two diametrically opposite coils; and
- having a parallel circuit of armature coils (SP1;SP1 and SP2;SPII and SP3;SPIII and SP4:SPIV and SP5;SPV and SP6;SPVI) which are in each case diametrically opposite on the circumference.

2. Commutator motor according to Claim 1,
- in each case having pairs of diametrically opposite armature coils (SP1;SP1 and SP2;SPII etc.) which are wound or configured in the sense of producing an identical electrical resistance.

3. Commutator motor according to Claim 1 and/or 2,
- in each case having diametrically opposite armature coils which are separated by in each case one flyer F1 or F2 of a winding apparatus but are wound at the same time.

4. Commutator motor according to Claim 1,
- having a support and/or fixing for the laminate contact links in the region of an electrically insulated section of the rotor shaft R of the commutator motor, between its commutator (K) and the laminated rotor core (P).

5. Method for winding production for a commutator motor according to at least one of Claims 1-4
- having the rotor winding produced with respectively successive armature coil pairs each comprising two diametrically opposite armature coils by winding the armature coils of one armature coil pair with in each one flyer F1 or F2, which'is provided for each armature coil, of a winding apparatus.

6. Method according to Claim 5,
- having a rotational/pivoting movement of the flyer F1 or F2 for winding in each case one armature coil (for example SP1) with contact being made between its coil start at a first commutator hook (H1) and its coil end with a second commutator hook (H2) with the commutator (K) being fixed such that it is stationary;
- having a tangential pivoting movement of the commutator (K) for winding through in each case one laminate contact link between the second commutator hook (H2) of the first armature coil (SP1) and the first commutator hook (H9) for the armature coil start of the second armature coil (for example SP2), which is wound in series, with the flyer fixed such that it is stationary (Figure 1).

## Revendications

1. Moteur électrique à collecteur, notamment destiné à l'entraînement d'un mécanisme d'assistance ou d'une servocommande de véhicule automobile,
- comprenant au moins quatre pôles d'excitation de stator (N1, S1; N2, S2);
- comprenant un nombre pair d'enroulements ou bobines d'induit (SP1-SP6; SPI-SPVI) concentrés, montés en série, ledit nombre étant supérieur au nombre des pôles d'excitation de stator;
- comprenant, pour respectivement quatre pôles d'excitation de stator, seulement deux balais (B1; B2) contactant un collecteur (K) en étant espacés réciproquement d'un pas polaire;
- comprenant des pontages de contact de lames (LB1-LB6; LBI-LBIV) exempts de balai, réalisés lors du bobinage des enroulements d'induit (SP1-SP6; SPI-SPVI), par bobinage continu en série, respectivement à la transition entre deux enroulements d'induit se succédant en circuit, entre les crochets de collecteur (H1-H12) correspondants;
- avec une longueur de pontage de contact de lames d'environ le double du pas polaire;
- comprenant des paires d'enroulements d'induit se succédant et constitués chacune de deux enroulements d'induit diamétralement opposés;
- et présentant un montage en parallèle d'enroulements d'induit (SP1; SPI resp. SP2; SPII resp. SP3; SPIII resp. SP4; SPIV resp. SP5; SPV resp. SP6; SPVI) respectivement diamétralement opposés sur la périphérie.

2. Moteur électrique à collecteur selon la revendication 1,
- comprenant des paires d'enroulements d'induit (SP1, SPI; SP2, SPII etc.) respectivement bobinées ou configurées dans l'optique d'une égale résistance électrique.

3. Moteur électrique à collecteur selon la revendication 1et/ou la revendication 2,
- comprenant des enroulements d'induit diamétralement opposés, bobinés respectivement séparément, mais simultanément, par une broche de bobinage respective F1 et F2 d'un dispositif de bobinage.

4. Moteur électrique à collecteur selon la revendication 1,
- comprenant un support et/ou une fixation des pontages de contact de lames dans la zone d'un tronçon isolé électriquement de l'arbre de rotor R du moteur électrique à collecteur, entre son collecteur (K) et l'empilement de tôles de rotor (P).

5. Procédé pour la fabrication par bobinage d'un moteur électrique à collecteur selon l'une au moins des revendications 1-4,
- comprenant une réalisation du bobinage du rotor avec des paires d'enroulements d'induit se succédant respectivement et constituées chacune de deux enroulements d'induit diamétralement opposés, par bobinage des enroulements d'induit d'une paire d'enroulements d'induit à l'aide d'une broche de bobinage F1 et respectivement F2 d'un dispositif de bobinage, prévue pour chaque enroulement d'induit.

6. Procédé selon la revendication 5,
- comprenant un mouvement de rotation-pivotement de la broche de bobinage F1 respectivement F2 pour le bobinage d'un enroulement d'induit (par exemple SP1) avec connexion de son début d'enroulement à un premier crochet de collecteur (H1) et de sa fin d'enroulement à un second crochet de collecteur (H2), ceci avec un collecteur (K) immobilisé au repos;
- comprenant un mouvement de pivotement tangentiel du collecteur (K) pour le bobinage continu d'un pontage de contact de lames respectif entre le second crochet de collecteur (H2) du premier enroulement d'induit (SP1) et le premier crochet de collecteur (H9) pour le début d'enroulement d'induit du second enroulement (par exemple SP2) bobiné en série, ceci avec une broche de bobinage immobilisée au repos (figure 1).
